(19) Europäisches Patentamt
European Patent Office
Office européen des brevets

(11) **EP 2 924 612 A1**

(12) **EUROPEAN PATENT APPLICATION**

(43) Date of publication:
**30.09.2015  Bulletin 2015/40**

(51) Int Cl.:
*G06K 9/00* *(2006.01)*     *G06T 7/00* *(2006.01)*

(21) Application number: **15159262.3**

(22) Date of filing: **16.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.03.2014  JP 2014060961**

(71) Applicant: **Kabushiki Kaisha Toshiba Tokyo 105-8001 (JP)**

(72) Inventor: **Seiki, Akihito Tokyo, 105-8001 (JP)**

(74) Representative: **Granleese, Rhian Jane Marks & Clerk LLP 90 Long Acre London WC2E 9RA (GB)**

(54) **Object detection device, object detection method, and computer readable storage medium comprising object detection program**

(57)     According to one embodiment, an object detection device includes a second setting controller to set a second position as a reference point, the second position being separated upward from the base point in a vertical axis direction on one of the images; a third setting controller to set a voting range having a height and a depth above the base point; a section configured to perform voting processing for the reference point in the voting range; and a detecting controller to detect a target object on the road surface based on a result of the voting processing.

FIG. 1

**Description**

FIELD

Embodiments described herein relate generally to an object detection device, an object detection method, and a computer readable non-transitory storage medium comprising an object detection program.

BACKGROUND

A camera installed on a moving object such as a vehicle and a robot is used to capture an image. The image is used to detect an object obstructing the travel of the moving object. This enables driving support and automatic control of the robot. To this end, it is necessary to detect a protrusion on the road surface and an object (such as pedestrians, other automobiles, and road structures) potentially obstructing the travel.

The following technique for estimating three-dimensional information is widely known. A plurality of images are acquired with different viewpoints. A parallax is determined from the positions corresponding between the plurality of images. Thus, the three-dimensional information for each position in the image (three-dimensional position) can be estimated by the principle of triangulation. This three-dimensional information can be used to detect an object existing on the road surface.

BRIEF DESCRIPTION OF THE DRAWINGS

FIG. 1 is a block diagram showing an example of an object detection device of a first embodiment;
FIG. 2 is a flow chart showing an example of an object detection method of the first embodiment;
FIGS. 3A to 3C are schematic views explaining the object detection method of the embodiment;
FIG. 4 is a detailed flow chart showing step S20 of the flow chart in FIG. 2;
FIGS. 5A to 10 are schematic views explaining the object detection method of the embodiment;
FIG. 11 is an image example of an input image;
FIG. 12 is an image example in which an estimated depth data is superimposed on the image of FIG. 11;
FIG. 13 is an image example in which the depth data is extracted from the image of FIG. 12;
FIG. 14 is an image example in which Th obtained by a voting result is superimposed;
FIG. 15 is an image example of a detection result of an object;
FIG. 16 is a block diagram showing an example of an object detection device of a second embodiment;
FIG. 17 is a flow chart showing an example of an object detection method of the second embodiment; and
FIG. 18 is schematic view explaining the object detection method of the second embodiment.

DETAILED DESCRIPTION

According to one embodiment, an object detection device includes a calculator to calculate depth of first positions matching between a plurality of images with different viewpoints captured by a capturing device mounted on a moving object moving on a road surface; a first setting controller to set one of the first positions as a base point; a second setting controller to set a second position as a reference point, the second position being separated upward from the base point in a vertical axis direction on one of the images; a third setting controller to set a voting range having a height and a depth above the base point; a performing controller to perform voting processing for the reference point in the voting range; and a detecting controller to detect a target object on the road surface based on a result of the voting processing.

Embodiments will now be described with reference to the drawings. In the drawings, like components are labeled with like reference numerals.

The embodiments relate to an object detection device, an object detection method, and a object detection program for detecting an object on a road surface potentially obstructing movement of a moving object. The object has a three dimensional geometry, and for example the object is a poll, a road traffic sign, a human, a bicycle, boxes scattering one the road, and so on.

The object is detected using three-dimensional information (three-dimensional position) of a captured target estimated from a plurality of images with different viewpoints. The plurality of images are captured by a capturing device such as a camera mounted on the moving object moving on the road surface.

The moving object is e.g. an automobile or a robot. The road surface is a surface on which an automobile travels. Alternatively, the road surface is an outdoor or indoor surface on which a robot walks or runs.

(First embodiment)

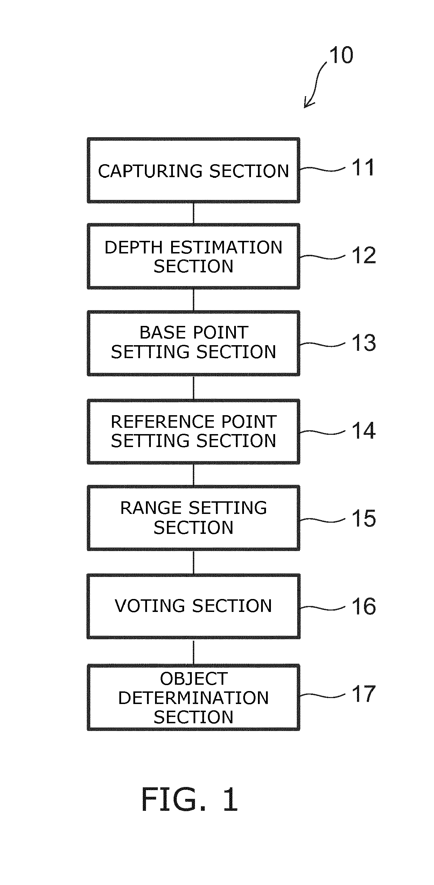

FIG. 1 is a block diagram showing an example of the configuration of an object detection device 10 of a first embodiment.

The object detection device 10 of the first embodiment includes a capturing section 11, a depth estimation section 12, a base point setting section 13, a reference point setting section 14, a range setting section 15, a voting section 16, and an object determination section 17.

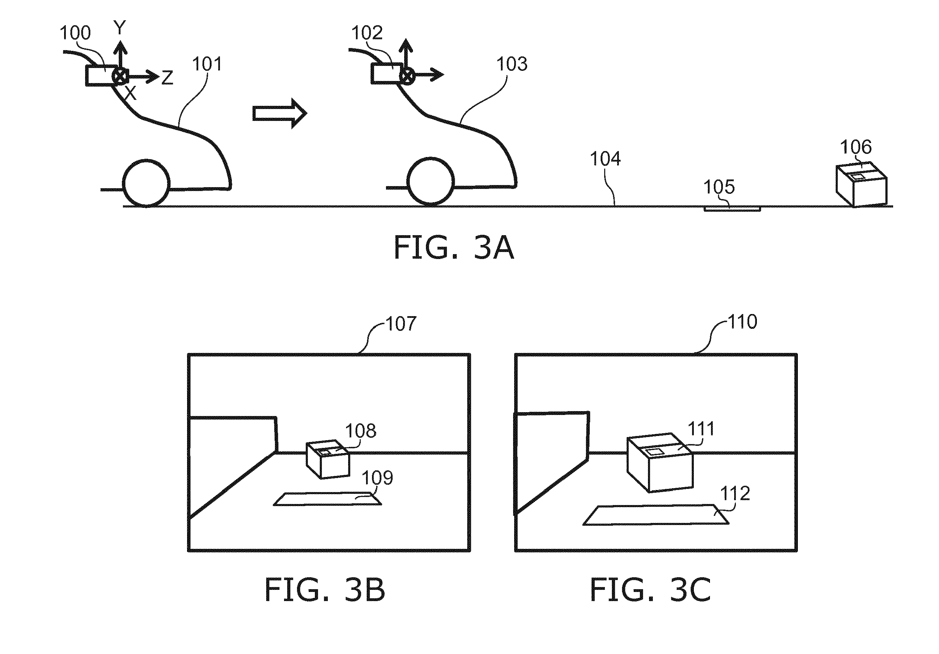

FIG. 3A schematically shows the state of an automobile as a moving object traveling on a road surface 104 at different (e.g., two) times.

In FIG. 3A, the right direction is the traveling direction of the moving object. With reference to the moving object 101 at a first time, the moving object 103 at a second time later than the first time is located on the traveling direction side of the moving object 101.

The moving object 101 and the moving object 103 are labeled with different reference numerals. However, the moving object 101 and the moving object 103 are different only in the position on the time axis, and refer to the same moving object. One capturing device, for instance, is mounted on that same moving object.

The capturing device 100 mounted on the moving object 101 located at the position of the first time is referred to as being located at a first viewpoint. The capturing device 102 mounted on the moving object 103 located at the position of the second time is referred to as being located at a second viewpoint.

The moving object 103 is located at the position where the moving object 101 has traveled on the traveling direction side along the road surface 104. Thus, the capturing device 100 and the capturing device 102 capture an image at different times. That is, according to the embodiment, a plurality of images with different viewpoints are captured by the capturing device 100, 102. The capturing device 100 and the capturing device 102 are different only in the position on the time axis, and refer to the same capturing device mounted on the same moving object.

The plurality of images are not limited to those with different viewpoints in time series. Alternatively, a plurality of capturing devices may be mounted on the moving object. A plurality of images with different viewpoints may be captured by the respective capturing devices at an equal time and used for the estimation of the three-dimensional information (depth) described later.

FIG. 3B shows an image 107 captured at the first time by the capturing device 100.

FIG. 3C shows an image 110 captured at the second time by the capturing device 102.

A road surface pattern 105 and an object 106 exist ahead of the moving object 101, 103 in the traveling direction. FIG. 3B shows an image 107 captured by the capturing device 100. In the image 107, the object 106 in FIG. 3A appears as an object 108, and the road surface pattern 105 in FIG. 3A appears as a road surface pattern 109. Likewise, FIG. 3C shows an image 110 captured by the capturing device 102. In the image 110, the object 106 in FIG. 3A appears as an object 111, and the road surface pattern 105 in FIG. 3A appears as a road surface pattern 112. The image 110 is captured at a position where the moving object has advanced in the traveling direction relative to the image 107. Thus, the object 106 and the road surface pattern 105 appear in a larger size in the image 110 than in the image 107.

In FIG. 3A, the Z-axis associated with the capturing device 100 represents an optical axis. The capturing device is installed so that the axis (Y-axis) extending perpendicular to the optical axis and upward of the road surface 104 is generally perpendicular to the road surface 104. The object 106 has a height in the direction perpendicular to the road surface 104. Thus, the object 106 appears as an object 108, 111 having a length in the vertical axis direction in the image 107, 111.

The capturing device 100, 102 is installed so as to face forward in the traveling direction of the moving object 101, 103. However, the installation is not limited thereto. Like a back camera of an automobile, the capturing device 100, 102 may be installed so as to face backward in the traveling direction. Alternatively, the capturing device 100, 102 may be installed so as to face sideways in the traveling direction.

It is sufficient to be able to acquire a plurality of images captured with different viewpoints. Thus, two capturing devices may be attached to the moving object to constitute a stereo camera. In this case, the moving object can obtain a plurality of images captured with different viewpoints without the movement of the moving object.

According to the embodiment, under the situation shown in FIGS. 3A to 3C, it is detected whether the road surface pattern 105 or the object 106 is an object protruding from the road surface 104.

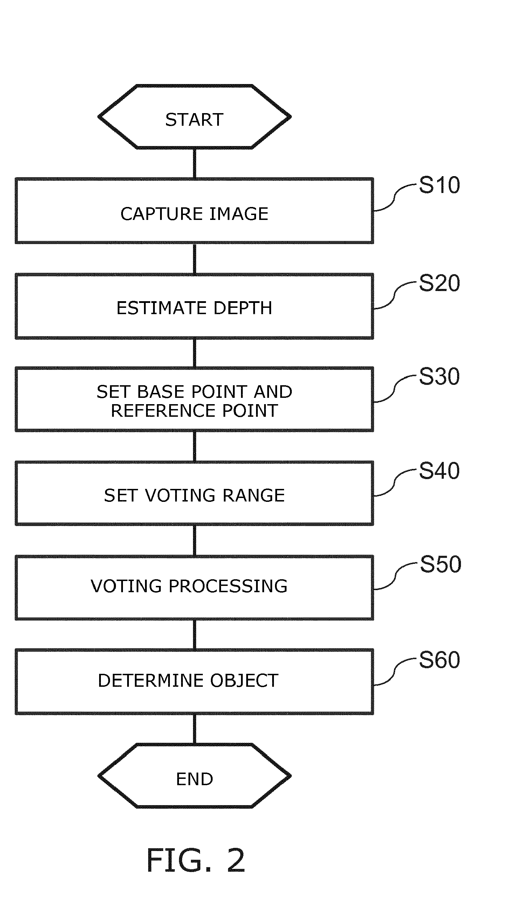

FIG. 2 is a flow chart showing an example of an object detection method using the object detection device 10 of the first embodiment.

First, in step S10, an object which is detected as a target object is captured from a plurality of different viewpoints by the capturing device 100, 102. The capturing section 11 shown in FIG. 1 acquires a plurality of images 107, 110 with different viewpoints captured by the capturing device 100, 102.

Next, in step S20, the plurality of images 107, 110 are used to estimate the depth. The depth estimation section 12 shown in FIG. 1 estimates the depth of the positions corresponding between the plurality of images 107, 110.

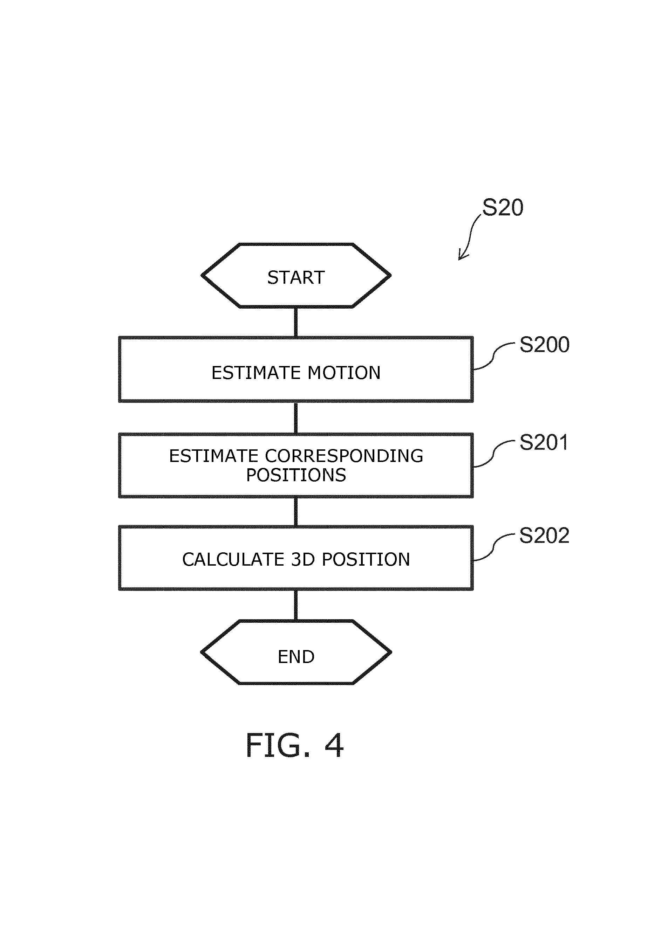

FIG. 4 is a flow chart showing step S20 in more detail.

First, in step S200, estimation of motion between the capturing device 100 and the capturing device 102 is performed. The capturing device 100, 102 moves in the space. Thus, the parameters determined by the estimation of motion are a three-dimensional rotation matrix and a three-dimensional translation vector.

The image 107 captured by the capturing device 100 and the image 110 captured by the capturing device 102 are used for the estimation of motion. First, feature points are detected from these images 107, 110. The method for detecting feature points can be one of many proposed methods for detecting that the brightness of the image is different from that of the surroundings, such as Harris, SUSAN, and FAST.

Next, feature points matched in both the images 107, 110 are determined. Matching between feature points can be determined based on existing methods such as sum of absolute difference (SAD), SIFT features, SURF features, ORB features, BRISK features, and BRIEF features in brightness within a small window enclosing the feature point.

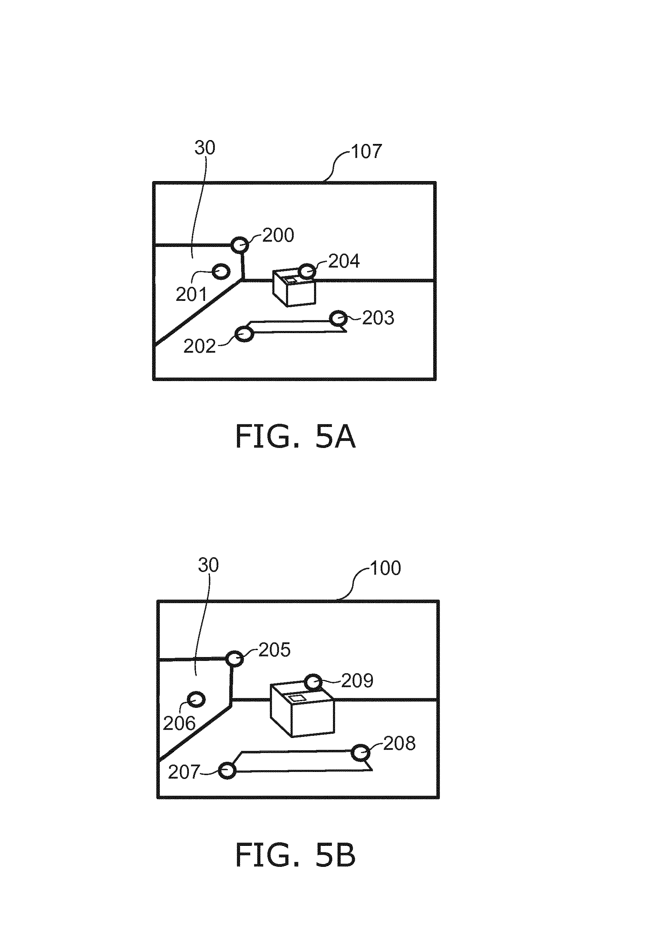

In the image 107 shown in FIG. 5A, feature points 200-204 are extracted. The feature points 200-204 are matched with the feature points 205-209 of the image 110 shown in FIG. 5B. For instance, the feature point 200 located on the left wall 30 of the image 107 is matched with the feature point 205 of the image 110. If there are five or more corresponding pairs of these feature points, the essential matrix E between the images can be determined as given by Equation 1.

[Equation 1]

$$\widetilde{\mathbf{x}}'^T \mathbf{E} \widetilde{\mathbf{x}} = \begin{bmatrix} x' & y' & 1 \end{bmatrix} \begin{bmatrix} 0 & -t_z & t_y \\ t_z & 0 & -t_x \\ -t_y & t_x & 0 \end{bmatrix} \mathbf{R} \begin{bmatrix} x \\ y \\ 1 \end{bmatrix} = 0$$

Here, the homogeneous coordinates x(tilde)' refer to the position of the feature point in the image 107 represented by normalized image coordinates. The homogeneous coordinates x(tilde) refer to the position of the feature point in the image 110 represented by normalized image coordinates. Here, it is assumed that the internal parameters of the capturing device 100, 102 have been previously calibrated and known in order to obtain the normalized image coordinates. If the internal parameters are unknown, it is also possible to estimate a fundamental matrix F by e.g. using seven or more corresponding pairs. Here, the internal parameters consist of the focal distance of the lens, the effective pixel spacing between capturing elements of the capturing device, the image center, and the distortion coefficient of the lens. The essential matrix E is composed of the rotation matrix R and the translation vector $t[t_x, ty, t_z]$. Thus, the three-dimensional rotation matrix and the translation vector between the capturing devices can be calculated as the estimation result of the motion by decomposing the essential matrix E.

Next, in step S201, the estimation result of the motion determined in step S200 is used as a constraint condition to determine the matching of the same position between the image 107 and the image 110.

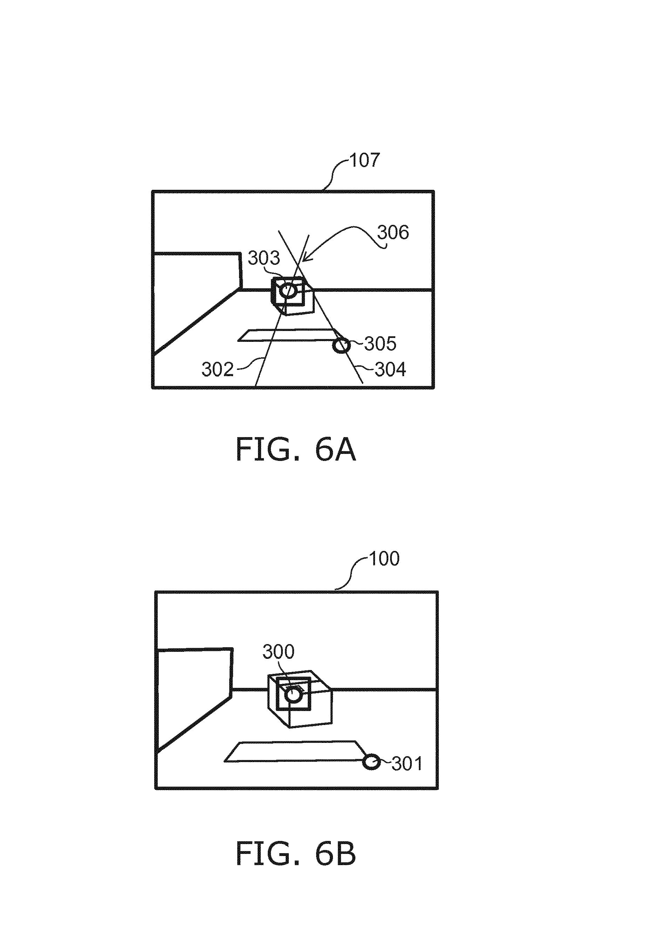

The essential matrix E is determined by motion estimation. Thus, the matching between the images is performed using the constraint condition. A point 300 is set on the image 110 shown in FIG. 6B. The corresponding position of this point 300 on the image 107 shown in FIG. 6A is determined. To this end, the coordinates of the point 300 are substituted into x(tilde) of Equation 1. The essential matrix E is known. Thus, Equation 1 gives an equation representing a straight line for x(tilde)'. This straight line is referred to as epipolar line and indicated by the line 302 on the image 107.

The position corresponding to the point 300 lies on this epipolar line 302. Matching on the epipolar line 302 is achieved by setting a small window around the point 300 and searching the epipolar line 302 of the image 107 for a point having a similar brightness pattern in the small window. Here, a point 303 is found.

Likewise, an epipolar line 304 is determined for the point 301. A point 305 is determined as a corresponding position. Estimation of corresponding points is similarly performed for other positions in the images 107, 110. Thus, the corresponding position is determined for each position in the images 107, 110. Here, the intersection point 306 of the epipolar line 302 and the epipolar line 304 is an epipole.

Next, in step S202, the estimation result of the motion in step S200 and the estimation result of the corresponding positions in step S201 are used to estimate the three-dimensional position of each position matched between the images 107, 110 based on the principle of triangulation.

The homogeneous coordinates of the three-dimensional position are denoted by X(tilde) = [X Y Z 1]. The perspective projection matrix of the capturing device 102 composed of the internal parameters of the capturing device

is denoted by $P_{1003}$. The perspective projection matrix of the capturing device 100 determined from the motion estimation result estimated in step S201 in addition to the internal parameters is denoted by $P_{1001}$. Then, Equation 2 holds.

[Equation 2]

$$\begin{cases} \widetilde{\mathbf{x}}' = \mathbf{P}_{1001}\widetilde{\mathbf{X}} = \mathbf{A}\big[\mathbf{R} \mid \mathbf{t}\big]\widetilde{\mathbf{X}} \\ \widetilde{\mathbf{x}} = \mathbf{P}_{1003}\widetilde{\mathbf{X}} = \mathbf{A}\big[\mathbf{I} \mid \mathbf{0}\big]\widetilde{\mathbf{X}} \end{cases}$$

Here, A represents the internal parameters. The values other than the three-dimensional position X are known. Thus, the three-dimensional position can be determined by solving the equation for X using e.g. the method of least squares.

Next, in step S30 shown in FIG. 2, a base point and a reference point are set at points on the image having the three-dimensional position information determined in step S20 (the points with the estimated depth).

The base point setting section 13 shown in FIG. 1 sets a base point at e.g. a position on the image different in brightness from the surroundings. The reference point setting section 14 sets a reference point at a point on the image having the three-dimensional position information (the point with the estimated depth). The point is located at the position separated upward from the base point in the vertical axis direction on the image.

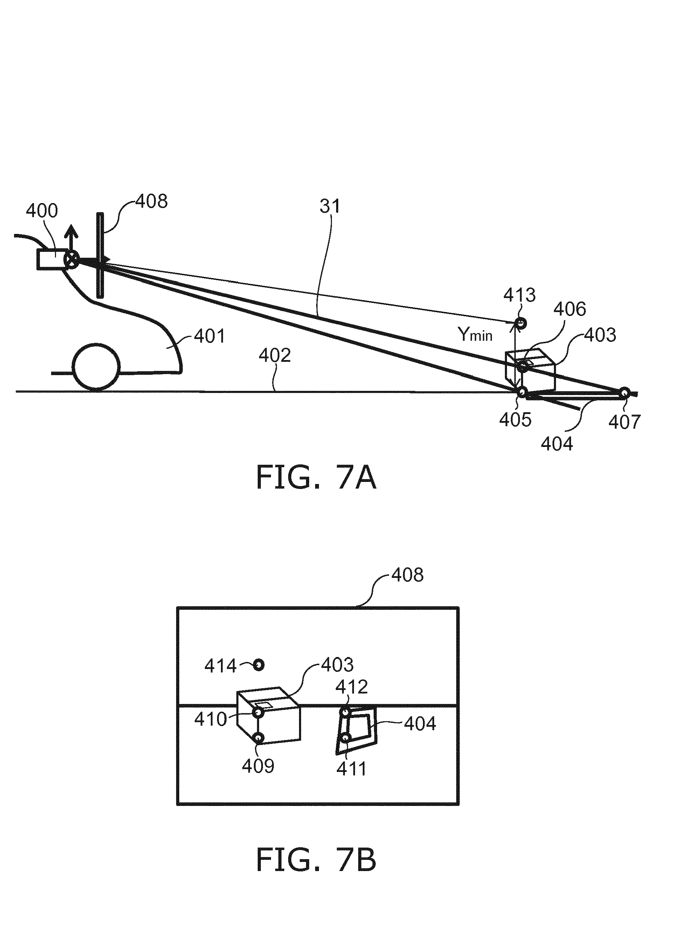

According to the embodiment, as shown in FIG. 7A, a capturing device 400 is mounted on a moving object 401. An object 403 and a road surface pattern 404 exist ahead in the traveling direction. FIG. 7B shows an image 408 captured under this situation. The object 403 and the road surface pattern 404 are projected on the image 408.

Here, in the image 408, a base point 409 is set on the object 403, and a base point 411 is set on the road surface pattern 404. Next, a reference point 410 is set vertically above the base point 409. A reference point 412 is set vertically above the base point 411.

The position of both the base point 409 and the base point 411 in the space shown in FIG. 7A is located at 405 if the base point 409 and the base point 411 are equal in position in the vertical axis direction on the image, and if the optical axis of the capturing device 400 is placed parallel to the road surface 402.

The reference point 410 and the reference point 412 lie on the straight line 31 passing through the optical center of the capturing device 400 if the reference point 410 and the reference point 412 are equal in position in the vertical axis direction on the image. The reference point 410 is located at the position 406 on the space shown in FIG. 7A. The reference point 412 is located at the position 407 on the space shown in FIG. 7A.

The direction connecting the position 405 and the position 406 is vertical to the road surface 402. The direction connecting the position 405 and the position 407 is parallel to the road surface 402.

During the travel of the moving object (vehicle) 401, the posture of the capturing device 400 with respect to the road surface 402 is unknown. However, in reality, the positional relationship between the moving object 401 and the road surface 402 is not significantly changed. Thus, the influence of the posture variation of the capturing device 400 with respect to the road surface 402 can be suppressed by providing a margin to the voting range specified in step S40 described later.

The base point 409, 411 and the reference point 410, 412 are both based on the positions (condition A) on the image with the determined three-dimensional information (depth). First, the base point 409, 411 is set based on the condition A.

Next, the reference point 410, 412 is set at a position away from the base point 409, 411 in the vertical axis direction of the image while satisfying the condition A. Preferably, a plurality of reference points are set for each base point. Alternatively, it is also possible to set a reference point only at an edge or corner point where the brightness of the image is significantly changed while satisfying the condition A.

The reference point 410, 412 is set above the base point 409, 411 in the vertical axis direction of the image. As a range of setting this reference point 410, 412, for instance, the minimum height Ymin (position 413) of the object to be detected can be set. That is, the reference point can be set within the range up to the height of the point 414 where Ymin is projected on the image of FIG. 7B.

Specifically, the coordinates of the reference point are denoted by $x(tilde)_{base}$. The three-dimensional position thereof is denoted by $X(tilde)_{base}$. The projection position $x(tilde)_{r}$ on the image for the minimum height Ymin of the object with respect to the spatial position of the base point is given by Equation 3 using the spatial perspective projection matrix $P_{4001}$.

[Equation 3]

$$\widetilde{\mathbf{x}}_r = \begin{bmatrix} x_r \\ y_r \\ 1 \end{bmatrix} = \mathbf{P}_{4001}\left(\widetilde{\mathbf{X}}_{base} + \begin{bmatrix} 0 \\ Y_{min} \\ 0 \\ 0 \end{bmatrix}\right)$$

$$\widetilde{\mathbf{x}}_{base} = \begin{bmatrix} x_b \\ y_b \\ 1 \end{bmatrix} = \mathbf{P}_{4001}\widetilde{\mathbf{X}}_{base}$$

The reference point can be set within the range from $y_r$ to $y_b$ given above.

Next, the range setting section 15 shown in FIG. 1 uses the base point and the reference point set in step S40 to set a voting range having a height and a depth above the base point.

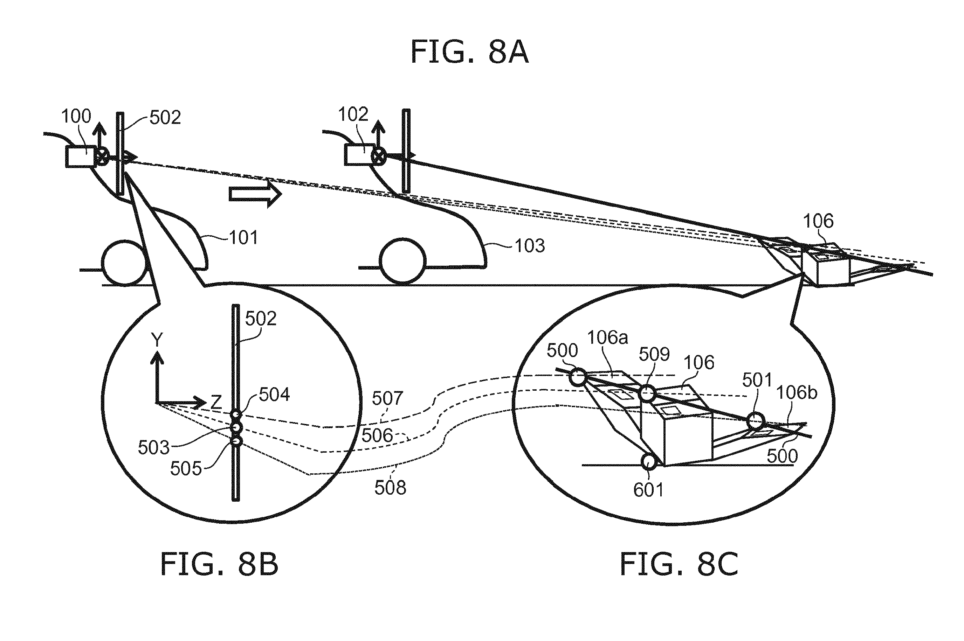

The object 106 in FIG. 8A is enlarged in FIG. 8C. The object 106 has an actual shape labeled with reference numeral 106. However, as shown in FIGS. 8A and 8C, the object 106 may be observed in a deformed shape such as shapes labeled with reference numerals 106a and 106b by errors in triangulation. This is caused by e.g. errors in determining the point corresponding between a plurality of images captured with different viewpoints.

As shown in an enlarged view in FIG. 8B, the true corresponding position is denoted by 503 in the image 502 captured by the capturing device 100. Two points 504 and 505 with errors are set for the position 503. The straight line passing through the optical center of the capturing device 100 and the point 503, 504, 505 is denoted by 506, 507, 508, respectively. Here, due to space limitations on the drawings, the lines 506, 507, 508 between FIG. 8B and FIG. 8C are depicted as curves. However, in reality, the lines 506, 507, 508 are straight lines. The intersection points of these straight lines 506, 507, 508 and the straight line 500 passing through the optical center of the capturing device 100 are denoted by 509, 510, 511, respectively. These form shapes 106a and 106b deviated from the true shape.

In this step, a voting range is set in view of such measurement errors.

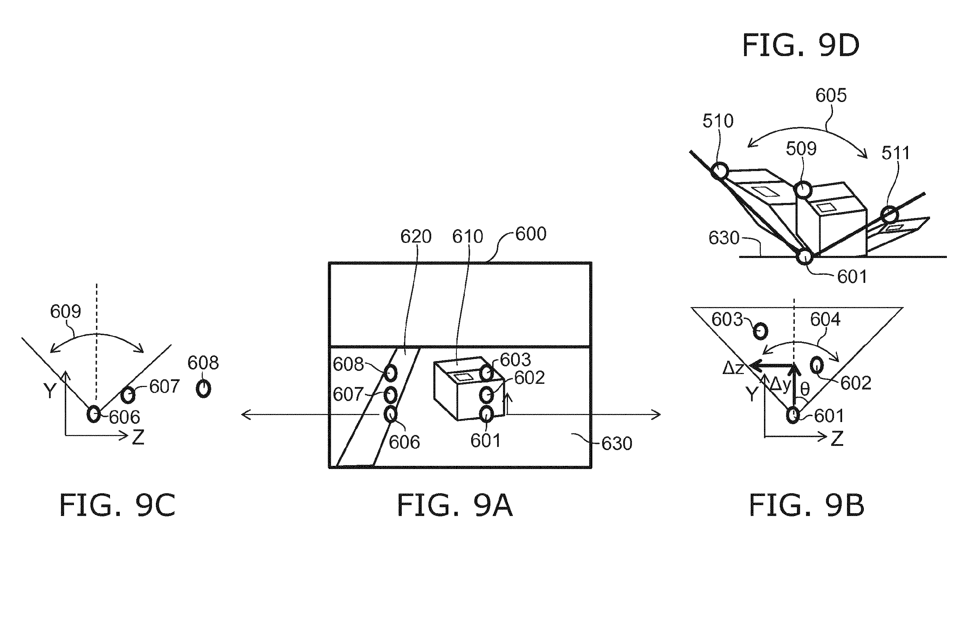

FIG. 9A shows an image 600 in which base points and reference points are set.

FIG. 9B shows the three-dimensional position of the reference points 602, 603 for the base point 601 of the object 610 displayed in the image 600.

FIG. 9C shows the three-dimensional position of the reference points 607, 608 for the base point 606 of the road surface pattern 620 displayed in the image 600.

In FIGS. 9B and 9C, the Z-direction represents the depth direction, and the Y-direction represents the height direction.

The point 601 shown in FIG. 9A is a base point set for the object 610. The point 602 and the point 603 are reference points corresponding to the base point 601.

Considering the deformation of an object as shown in FIGS. 8C and 9D due to measurement errors of three-dimensional information, the points 509, 510, 511 fall within the range 605. A voting range 604 can be set corresponding to this range 605. Then, the number of reference points 602, 603 located in the voting range 604 and belonging to the object 610 can be counted.

On the other hand, the base point 606 and the reference points 607, 608 set on the road surface pattern 620 lie on the road surface 630. Thus, these points are distributed long in the depth direction Z as shown in FIG. 9C. Accordingly, for the road surface pattern 620, the reference points 607, 608 are not included in the voting range 609 even if the voting range 609 is the same as the voting range 604 for the object.

Next, an example of the method for setting a voting range, i.e., the method for setting $\Delta z$ and $\Delta y$ shown in FIG.

9B, is described. Δz represents half the width in the depth direction Z of the voting range 604 at an arbitrary height Δy from the base point 601.

One method is to expand the width in the depth direction Z of the voting range with the increase in the Y-direction for the base point in view of the deformation of the object due to measurement errors of three-dimensional information. That is, this can be expressed as Equation 4.

[Equation 4]

$$\frac{\Delta z}{\Delta y} = \tan\theta$$

Here, θ is half the angle of the voting range 604 spread in a fan shape from the base point 601. It is assumed that the optical axis of the capturing device is placed generally parallel to the road surface. Then, with the decrease of the value of tan θ, the reference points belonging to the object perpendicular to the road surface are more likely to fall within the voting range 604. That is, the object nearly perpendicular to the road surface is detected more easily. However, the object inclined with respect to the road surface is detected less easily.

Conversely, with the increase of tan θ, the reference points belonging to the object inclined with respect to the road surface are more likely to fall within the voting range 604. This increases the possibility of detecting the road surface pattern as an object.

One of the methods for setting tan θ is to use a fixed value. The maximum gradient of the road is stipulated by law. In Japan, the maximum gradient is approximately 10° (θ is approximately 90-10=80°). Thus, θ is set to be smaller than 80°. Alternatively, in order to speed up calculation, Δz may be set to an easily calculable value such as one, half, and two multiplied by Δy irrespective of the angle.

Another possible method is to change the value of tan θ depending on the distance between the moving object and the detection target. At a far distance, the road shape may be inclined at a large angle with respect to the vehicle due to e.g. ups and downs. However, in the region near the vehicle, the slope of the road is small. Thus, the slope of the capturing device with respect to the road surface is not large at a position with small depth Z. Accordingly, tan θ is increased to facilitate detecting an object inclined with respect to the road surface.

Conversely, at a position with large depth Z, it is desired to avoid erroneously identifying a road surface pattern as an object due to the slope of the road surface. Accordingly, tan θ is decreased to facilitate detecting only an object nearly perpendicular to the road surface.

Alternatively, the voting range can be set depending on the measurement error (depth estimation error) of three-dimensional information. The measurement error (depth estimation error) of three-dimensional information is calculated by Equation 5 with reference to Equation 2.

[Equation 5]

$$\begin{cases} \tilde{\mathbf{x}}' + \begin{bmatrix} \varepsilon_x & \varepsilon_y & 0 \end{bmatrix}^T = \mathbf{P}_{1001}\tilde{\mathbf{X}}_e \\ \tilde{\mathbf{x}} = \mathbf{P}_{1003}\tilde{\mathbf{X}} = \mathbf{A}\begin{bmatrix} \mathbf{I} \mid \mathbf{0} \end{bmatrix}\tilde{\mathbf{X}}_e \end{cases}$$

Here, εx and εy are assumed measurement errors. x(tilde) and x(tilde)' are corresponding positions of the base point or reference point in the image captured by the capturing device with different viewpoints. Preferably, for the base point and the reference point, the absolute value of $\varepsilon x^2 + \varepsilon y^2$ is fixed, and εx and εy are aligned along the epipolar line direction. X(tilde)e = [Xe Ye Ze 1] is the three-dimensional position including the measurement error represented in the homogeneous coordinate system.

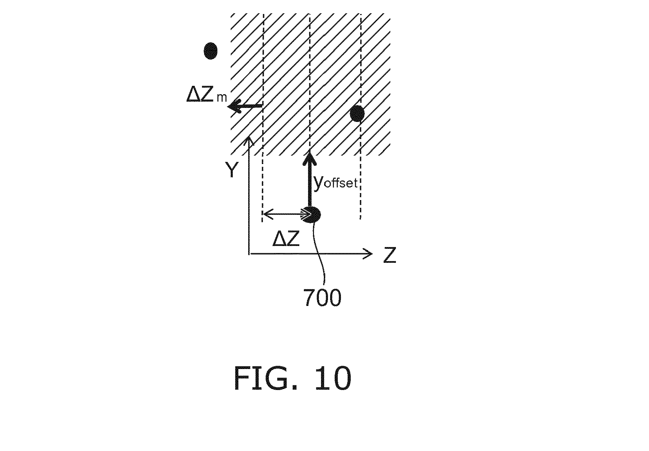

FIG. 10 shows a voting range 703 by hatching.

ΔZ is e.g. the absolute value of Ze-Z using the estimation result of the three-dimensional position at the reference point 700 and the difference in the depth direction of the estimation result of the three-dimensional position including the measurement error.

$y_{offset}$ is a threshold for excluding the road surface pattern from the voting range. $\Delta Zm$ is a threshold for facilitating detection even if the object is inclined from the road surface. $\Delta Zm$ may be increased depending on the height change as in Equation 4. $\Delta Z$ may be based on the estimation result of the three-dimensional position at the reference point, or the estimation result of the three-dimensional position including the measurement error.

After setting the aforementioned voting range, in the next step S50, the voting section 16 shown in FIG. 1 performs voting processing for the reference points in the voting range.

In this voting processing, two voting values T1 and T2 are held in association with the position (coordinates) of the base point on the image. The voting value T1 is the number of reference points corresponding to each base point. The voting value T2 is the number of reference points falling within the voting range.

For larger T1, more three-dimensional information is collected above the base point. For larger T2, more reference points with three-dimensional positions in the direction perpendicular to the road surface are included.

Next, in step S60, the object determination section 17 shown in FIG. 1 detects an object on the road surface using e.g. the voting values T1, T2 calculated in step S50.

For a larger value of T2, there are more reference points with three-dimensional positions in the direction perpendicular to the road surface. However, at the same time, when the value of T1 is sufficiently large, T2 may gain a larger number of votes due to noise.

Th is normalized as 0 or more and 1 or less. When Th is 1, the possibility of an object is maximized. Conversely, Th close to 0 indicates that most of the reference points belong to a road surface pattern. Thus, a threshold is set for T2/T1=Th. The object determination section 17 detects an object at a position where Th is larger than the threshold.

The base point is set at a position where it is assumed that the road surface and the object are in contact with each other. Thus, the lower end position of the detected object is often located at a position in contact with the road surface. In the case of determining the three-dimensional position of the object in addition to its position on the image, the three-dimensional position can be determined by holding the three-dimensional coordinates simultaneously with recording T1 and T2 in step S50. This information can be used to estimate also the positional relationship between the capturing device and the road surface.

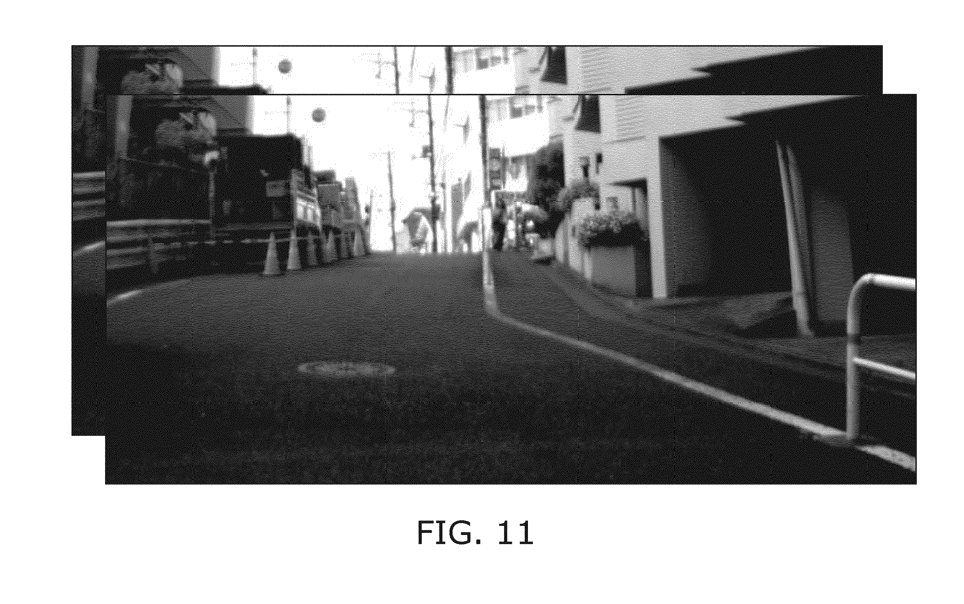

FIG. 11 shows e.g. two image examples captured with different viewpoints by a capturing device mounted on an automobile.

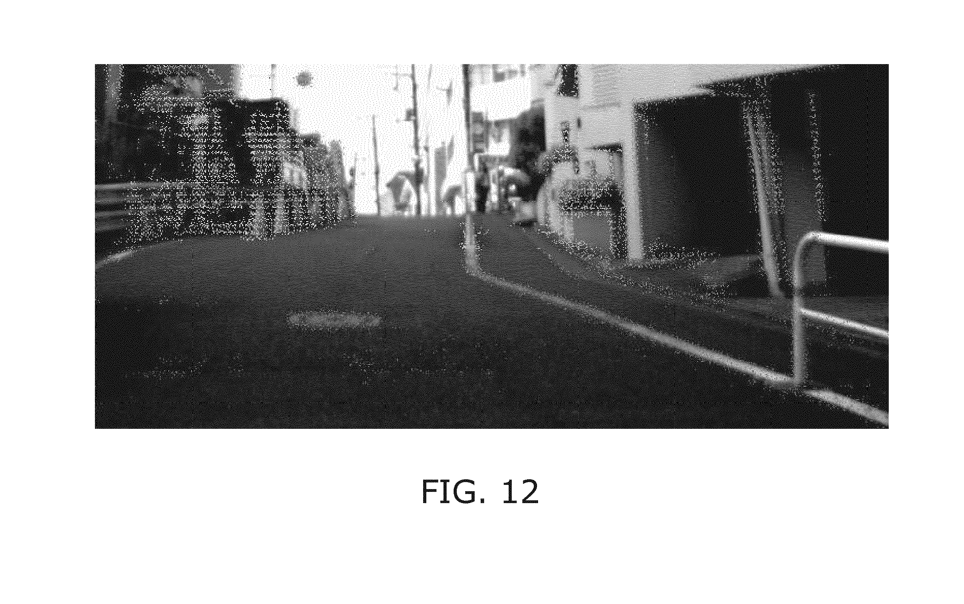

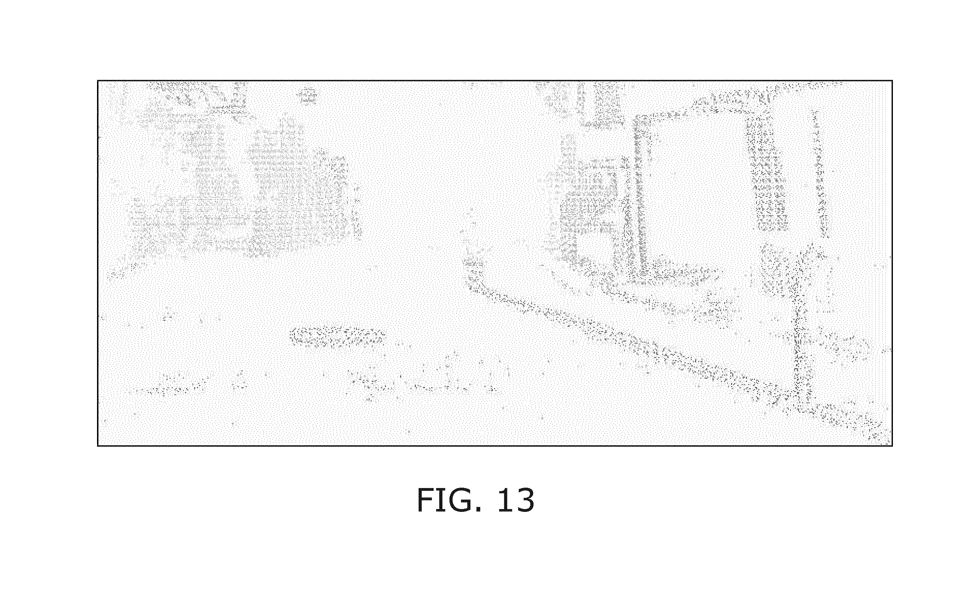

FIG. 12 shows an image in which the three-dimensional position determined in step S20 is superimposed on the image of FIG. 11. FIG. 13 shows an image in which only depth information is extracted by eliminating the background image from FIG. 12. These images can be displayed in gray scale or color.

In a gray scale image, the position of a relatively dark point is nearer to the self vehicle than the position of a relatively light point. A color image can be displayed with colors depending on the depth. For instance, the position of a red point is nearer to the self vehicle, and the position of a blue point is farther from the self vehicle.

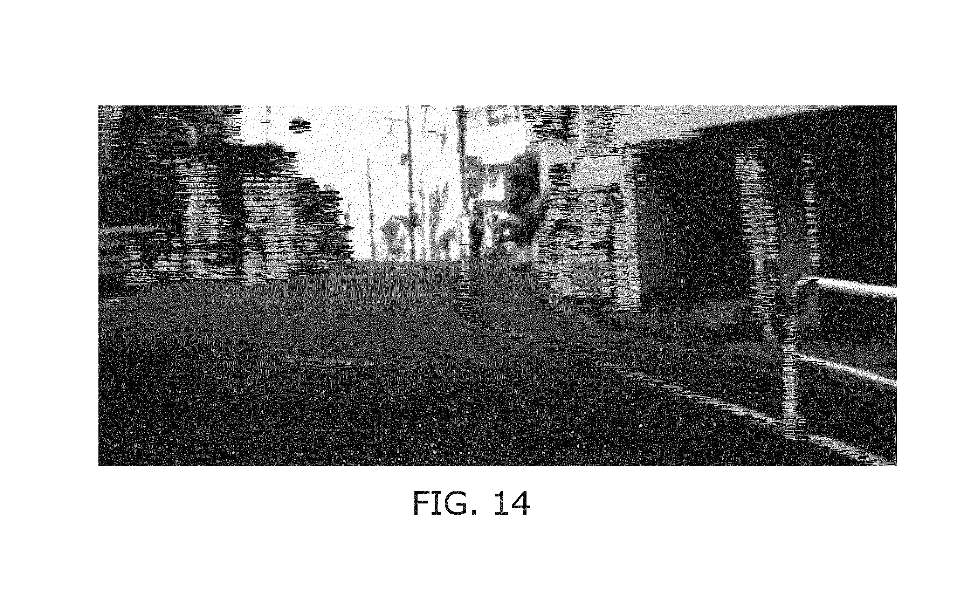

Alternatively, as shown in FIG. 14, the image can be displayed with colors depending on the magnitude of Th (= T2/T1) described above. For instance, red corresponds to Th close to 1, indicating the likelihood of being an object. White lines, manhole lids and the like on the road surface are displayed in black indicating a fixed value. It can be confirmed that the value of Th increases around an object. The image can also be displayed in gray scale. A white position has larger Th than a black position.

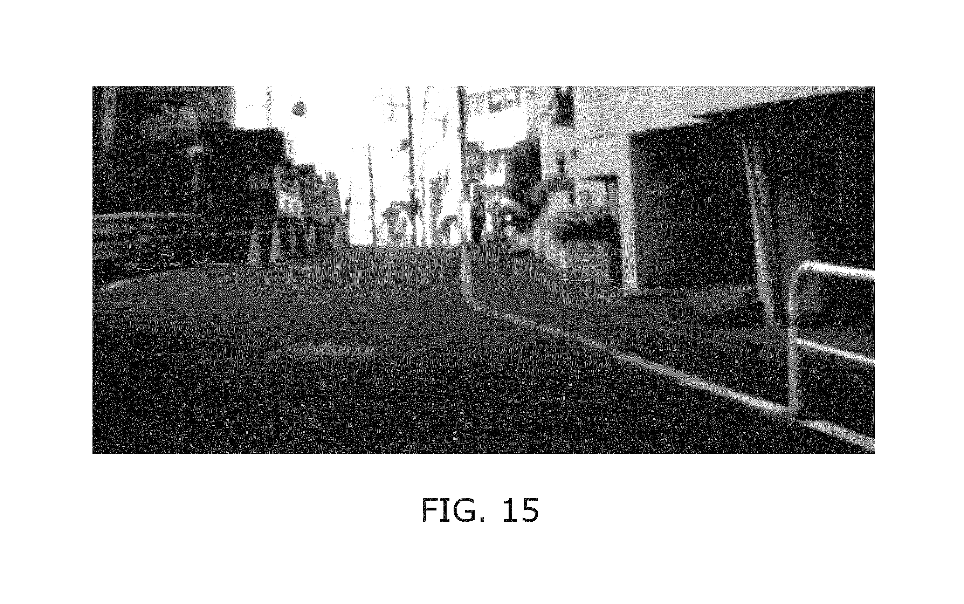

In FIG. 15, the lower end position of the portion in which positions with Th exceeding the threshold are distributed is indicated with a different color (e.g., white in a gray scale image, or green in a color image). Many objects are detected on the boundary line between the road surface and the object. There are also objects floating in the air. However, the depth is known. Thus, the projection position on the image can also be calculated from the boundary position in the three-dimensional space between the road surface and the object using Equation 2 if the positional relationship between the capturing device and the road surface is known.

Here, a proposed method for detecting a road surface and an object from three-dimensional information is described as a comparative example. This method locally determines an object and a road surface based on the obtained three-dimensional information without assuming that the road surface is flat. In this method, blocks with different ranges depending on the magnitude of parallax are previously prepared. Then, three-dimensional information (parallax) in the image is voted for a particular block. Separation between a road surface and an object is based on the voting value or deviation in the block.

In this method, parallax in the range defined per pixel is voted for a particular block. Thus, it is impossible to detect an object at a far distance or near the epipole, where parallax is required with the accuracy of the sub-pixel order. One camera may be installed so as to face forward in the traveling direction. Three-dimensional information may be obtained from a plurality of images captured at different times. In this case, an epipole occurs near the center of the image. Handling of parallax with the accuracy of the sub-pixel order would cause the problem of a huge number of blocks, which requires a large amount of memory.

In contrast, according to the embodiment, the voting range is set in view of the depth difference between the base point and the reference point set for each position on the image. Thus, even in the case where the road surface is not flat, or in the case where parallax is required with the accuracy of the sub-pixel order near the epipole or at a far distance, the memory usage is left unchanged. This enables detection of an object with a fixed amount of memory.

(Second embodiment)

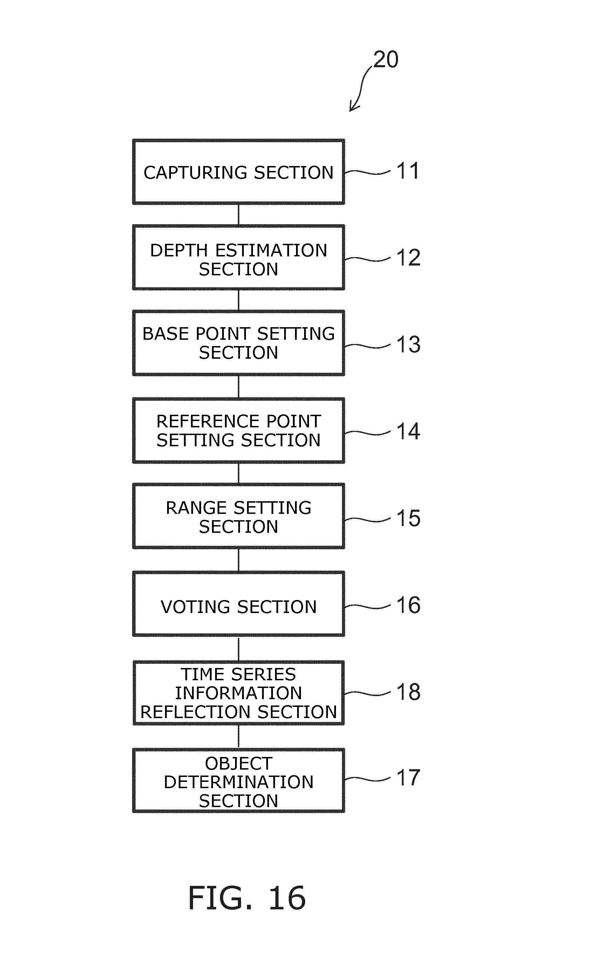

FIG. 16 is a block diagram showing an example of the configuration of an object detection device 20 of a second embodiment.

The object detection device 20 of the second embodiment further includes a time series information reflection section 18 in addition to the components of the object detection device 10 of the first embodiment.

The time series information reflection section 18 adds the first voting processing result determined from a plurality of images with different viewpoints captured at a first time to the second voting processing result determined from a plurality of images with different viewpoints captured at a second time later than the first time.

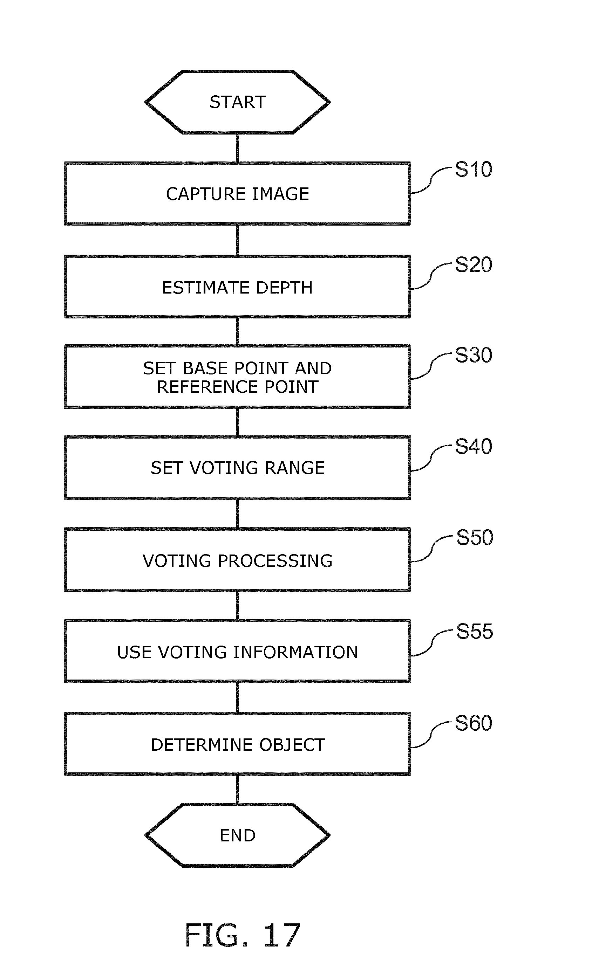

FIG. 17 is a flow chart showing an example of an object detection method using the object detection device 20 of the second embodiment.

Steps S10-S50 and step S60 are processed as in the first embodiment. The processing of the second embodiment additionally includes step S55.

The processing of the time series information reflection section 18 in step S55 propagates the voting result in the time series direction. This can improve the stability of object detection.

Correct matching of positions between the images may fail due to e.g. the brightness change or occlusion in the image. Then, the three-dimensional position is not estimated, and a sufficient number of votes cannot be obtained. This causes concern about the decrease of detection accuracy of the object. In contrast, the number of votes can be increased by propagating the number of votes in the time direction. This can improve the detection rate of object detection.

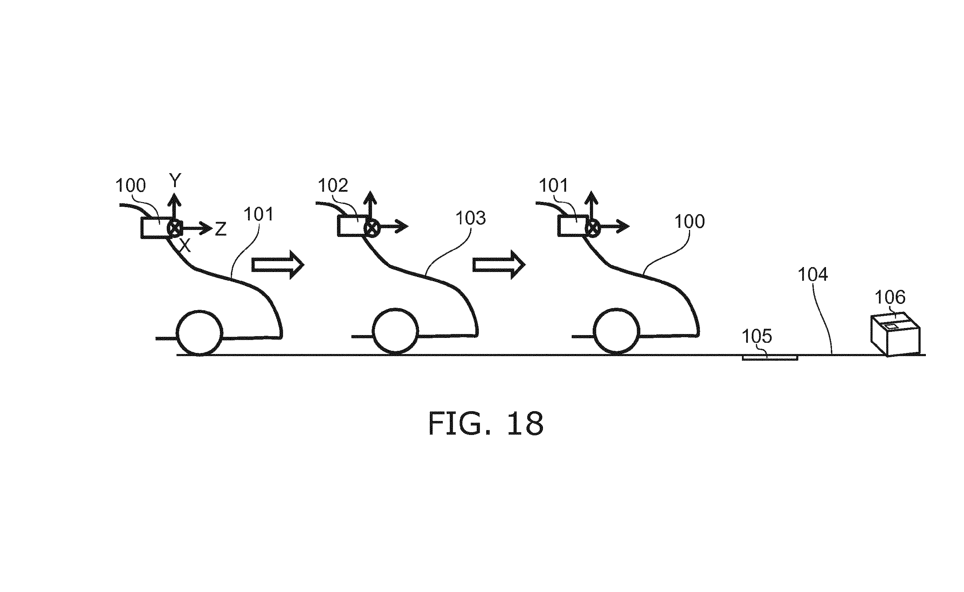

For instance, it is assumed that the voting processing of step S50 has already been finished as described in the first embodiment using the captured images of the capturing device 100 and the capturing device 102 shown in FIG. 18. The voting processing result determined from the captured images of the capturing device 100 and the capturing device 102 is referred to as the voting processing result of a first time.

Next, steps S10-S50 are performed using the captured images of the capturing device 121 mounted on the moving object 120 further advanced in the traveling direction from the position of the capturing device 102 and the captured images of the capturing device 102 of the previous time. Thus, a voting result for the images of the capturing device 121 is obtained.

At the previous time, the voting result has already been obtained for the images of the capturing device 102. The motion between the capturing device 121 and the capturing device 102 has been estimated in step S200 described above. Thus, the result of motion estimation and the three-dimensional position of the base point associated with the voting result of the previous time can be used to determine the position corresponding to the image of the capturing device 121 by the coordinate transformation and the perspective projection transformation based on the motion estimation result.

For the determined position, T1 and T2 of the previous time are added to the voting result for the image of the capturing device 121.

Alternatively, T1 and T2 of the previous time may be added after being multiplied by a weight smaller than 1 in order to attenuate the past information and to prevent the number of votes from increasing with the passage of time. In the next step S60, the obtained new voting result is used to detect an object as in the first embodiment. This voting result is saved in order to use the voting result at a next time.

The object detection program of the embodiment is stored in a memory device. The object detection device of the embodiment reads the program and executes the aforementioned processing (object detection method) under the instructions of the program. The object detection program of the embodiment is not limited to being stored in a memory device installed on the moving object or a controller-side unit for remote control. The program may be stored in a portable disk recording medium or semiconductor memory.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modification as would fall within the scope and spirit of the inventions.

**Claims**

1. An object detection device comprising:

   a calculator to calculate depth of first positions matching between a plurality of images (107,110) with different viewpoints captured by a capturing device mounted on a moving object moving on a road surface;
   a first setting controller to set one of the first portions as a base point (601,606);
   a second setting controller to set a second position as a reference point (602,603,607,608), the second position being separated upward from the base point (601,606) in a vertical axis direction on one of the images;
   a third setting controller to set a voting range (604,609) having a height and a depth above the base point (601,606);
   a performing controller to perform voting processing for the reference point (602,603) in the voting range (604); and
   a detecting controller to detect a target object (610) on the road surface based on a result of the voting processing.

2. The device according to claim 1, wherein width in the depth direction (Z) of the voting range (604,609) is expanded with increase of height (Y) from the base point (601,606).

3. The device according to claim 1, wherein the voting range is changed depending on distance between the moving object and the target object.

4. The device according to claim 1, wherein the voting range is changed depending on estimation error of the depth.

5. The device according to claim 1, wherein the result of first voting processing determined from the plurality of images with the different viewpoints captured at a first time is added to the result of second voting processing determined from the plurality of images with the different viewpoints captured at a second time later than the first time.

6. The device according to claim 1, wherein the base point is set to a position different from surroundings in brightness on the image.

7. The device according to claim 1, wherein a plurality of the reference points are set for the base point.

8. The device according to claim 7, wherein
   a threshold is set for T2/T1, where T1 is number of the reference points corresponding to the base point, and T2 is number of the reference points falling within the voting range, and
   an object is detected at a position where the T2/T1 is larger than the threshold.

9. The device according to claim 8, wherein distribution of positions with the T2/T1 being larger than the threshold is superimposed on the image captured by the capturing device.

10. The device according to claim 1, wherein the plurality of images with the different viewpoints include a plurality of images captured at different times.

11. The device according to claim 1, wherein the plurality of images with the different viewpoints include images respectively captured at an equal time by a plurality of capturing devices mounted on the moving object.

12. An object detection method comprising:

    calculating depth of first positions matching between a plurality of images (107,110) with different viewpoints captured by a capturing device mounted on a moving object moving on a road surface;
    setting one of the first portions as a base point (601,606);
    setting a second position as a reference point (602,603,607,608) at a position having the estimated depth, the second position being separated upward from the base point (601,606) in a vertical axis direction on the image;
    setting a voting range (604,609) having a height and a depth above the base point (601,606);
    performing voting processing for the reference point (602,603) in the voting range (604); and
    detecting a target object (610) on the road surface based on a result of the voting processing.

13. A computer readable storage medium comprising an object detection program, the program causing a computer to execute processing operable for:

calculating depth of first positions matching between a plurality of images (107,110) with different viewpoints captured by a capturing device mounted on a moving object moving on a road surface;

setting one of the first portions as a base point (601,606);

setting a second position as a reference point (602,603,607,608) at a position having the estimated depth, the second position being separated upward from the base point (601,606) in a vertical axis direction on the image;

setting a voting range (604,609) having a height and a depth above the base point (601,606);

performing voting processing for the reference point (602,603) in the voting range (604,609); and

detecting a target object (610) on the road surface based on a result of the voting processing.

CAPTURING SECTION — 11

DEPTH ESTIMATION SECTION — 12

BASE POINT SETTING SECTION — 13

REFERENCE POINT SETTING SECTION — 14

RANGE SETTING SECTION — 15

VOTING SECTION — 16

OBJECT DETERMINATION SECTION — 17

FIG. 1

FIG. 2

FIG. 3A

FIG. 3B

FIG. 3C

EP 2 924 612 A1

S20

```
            ┌─────────────────────┐
            │        START        │
            └─────────────────────┘
                      │
   ┌──────────────────────────────────┐
   │         ESTIMATE MOTION          │ ── S200
   └──────────────────────────────────┘
                      │
   ┌──────────────────────────────────┐
   │     ESTIMATE CORRESPONDING       │ ── S201
   │            POSITIONS             │
   └──────────────────────────────────┘
                      │
   ┌──────────────────────────────────┐
   │       CALCULATE 3D POSITION      │ ── S202
   └──────────────────────────────────┘
                      │
            ┌─────────────────────┐
            │         END         │
            └─────────────────────┘
```

FIG. 4

FIG. 5A

FIG. 5B

FIG. 6A

FIG. 6B

FIG. 7A

FIG. 7B

# FIG. 8A

EP 2 924 612 A1

# FIG. 8B

# FIG. 8C

FIG. 9D

FIG. 9C

FIG. 9A

FIG. 9B

EP 2 924 612 A1

FIG. 10

FIG. 11

FIG. 12

FIG. 13

FIG. 14

FIG. 15

20

CAPTURING SECTION —— 11

DEPTH ESTIMATION SECTION —— 12

BASE POINT SETTING SECTION —— 13

REFERENCE POINT SETTING SECTION —— 14

RANGE SETTING SECTION —— 15

VOTING SECTION —— 16

TIME SERIES INFORMATION REFLECTION SECTION —— 18

OBJECT DETERMINATION SECTION —— 17

FIG. 16

START

CAPTURE IMAGE — S10

ESTIMATE DEPTH — S20

SET BASE POINT AND REFERENCE POINT — S30

SET VOTING RANGE — S40

VOTING PROCESSING — S50

USE VOTING INFORMATION — S55

DETERMINE OBJECT — S60

END

FIG. 17

FIG. 18

Europäisches
Patentamt

European
Patent Office

Office européen
des brevets

**EUROPEAN SEARCH REPORT**

Application Number

EP 15 15 9262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERNÁN BADINO ET AL: "Free Space Computation Using Stochastic Occupancy Grids and Dynamic Programming", INTERNET CITATION, 1 January 2007 (2007-01-01), pages 1-12, XP008131597, Retrieved from the Internet: URL:http://www.vision.jhu.edu/iccv2007-wdv /WDV07-badino.pdf [retrieved on 2011-01-14] * sect.3; figure 2 * ----- | 1-13 | INV. G06K9/00 G06T7/00 |
| A | US 2008/036576 A1 (STEIN GIDEON S [IL] ET AL) 14 February 2008 (2008-02-14) * par.26-28, 34; figure Fig.2 * ----- | 1-13 | |
| X | David Gerónimo ET AL: "Adaptive Image Sampling and Windows Classification for On-board Pedestrian Detection", , 1 January 2007 (2007-01-01), XP055203874, Retrieved from the Internet: URL:http://www.davidgeronimo.com/publicati ons/geronimo_icvs2007.pdf [retrieved on 2015-07-21] * sect.2.1; figure 1 * ----- | 1-13 | TECHNICAL FIELDS SEARCHED (IPC) G06K G06T G01B B60W |

-/--

The present search report has been drawn up for all claims

| Place of search | Date of completion of the search | Examiner |
|---|---|---|
| The Hague | 24 July 2015 | Darolti, Cristina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 15 15 9262

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YINGPING HUANG ET AL: "Stereovision-Based Object Segmentation for Automotive Applications", EURASIP JOURNAL ON ADVANCES IN SIGNAL PROCESSING, vol. 2005, no. 14, 25 August 2005 (2005-08-25), pages 2322-2329, XP055095478, ISSN: 1687-6172, DOI: 10.1155/ASP.2005.2322 * the whole document * ----- | 1-13 | |
| A | Á Rakusz ET AL: "LIDAR-BASED VEHICLE SEGMENTATION", , 18 December 2012 (2012-12-18), XP055203872, Retrieved from the Internet: URL:http://www.isprs.org/proceedings/XXXV/congress/comm2/papers/115.pdf [retrieved on 2015-07-21] * sect.3 par.3 * ----- | 1 | |
| A | David Pfeiffer ET AL: "Robust and Precise 3D-Modeling of Traffic Scenes based on Dense Stereo Vision", , 1 January 2009 (2009-01-01), XP055203875, Retrieved from the Internet: URL:https://www.mydlt.de/david/page/pubs/fas_repr_of_traffic_scenes_2009.pdf [retrieved on 2015-07-21] * sect.4; figure 5 * ----- -/-- | 1-13 | |

TECHNICAL FIELDS
SEARCHED (IPC)

The present search report has been drawn up for all claims

| Place of search | Date of completion of the search | Examiner |
|---|---|---|
| The Hague | 24 July 2015 | Darolti, Cristina |

EPO FORM 1503 03.82 (P04C01)

Europäisches
Patentamt

European
Patent Office

Office européen
des brevets

# EUROPEAN SEARCH REPORT

Application Number

EP 15 15 9262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Richard Hartley ET AL: "Multiple View Geometry", ,<br>1 June 1999 (1999-06-01), XP055016812, Retrieved from the Internet: URL:http://users.rsise.anu.edu.au/hartley/public_html/Papers/CVPR99-tutorial/tut_4up.pdf<br>[retrieved on 2012-01-18]<br>* the whole document * | | |

-----

TECHNICAL FIELDS
SEARCHED       (IPC)

The present search report has been drawn up for all claims

| Place of search | Date of completion of the search | Examiner |
|---|---|---|
| The Hague | 24 July 2015 | Darolti, Cristina |

EPO FORM 1503 03.82 (P04C01)

## ANNEX TO THE EUROPEAN SEARCH REPORT
## ON EUROPEAN PATENT APPLICATION NO.

EP 15 15 9262

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2015

| Patent document cited in search report | Publication date | Patent family member(s) | Publication date |
|---|---|---|---|
| US 2008036576 A1 | 14-02-2008 | US 2008036576 A1<br>US 2011018700 A1<br>US 2013135444 A1 | 14-02-2008<br>27-01-2011<br>30-05-2013 |

EPO FORM P0459

For more details about this annex : see Official Journal of the European Patent Office, No. 12/82